# EUROPÄISCHE PATENTANMELDUNG

(11) **EP 2 309 228 A2**
(43) Veröffentlichungstag der Anmeldung: **13.04.2011**
(21) Anmeldenummer: 10185395.0
(22) Anmeldetag: 01.10.2010
(51) Int. Cl.: G01C 21/36

(54) **Verfahren zum Betrieb eines Navigationssystems**

(30) Priorität: 06.10.2009 DE 102009048431
(71) Anmelder: Navigon AG, 20251 Hamburg (DE)
(72) Erfinder: Götzelmann, Timo, 97070, Würzburg (DE)
(74) Vertreter: von den Steinen, Axel

(57) **Zusammenfassung**

Die Erfindung betrifft ein Verfahren zum Betrieb eines Navigationssystems mit einer Kartendatenspeichereinrichtung (02, 07), in der digitale Kartendaten (01, 06) zur Beschreibung eines geographischen Gebietes gespeichert sind, einer Darstellungserzeugungseinrichtung (3), die zumindest zur Erzeugung von Kartendarstellungen aus den Kartendaten der Kartendatenspeichereinrichtung (02, 07) eingerichtet ist, mit zumindest einer Anzeigeeinrichtung (05,13), die zur Darstellung optischer Inhalte eingerichtet ist, mit zumindest einer Positionsbestimmungseinrichtung, mit zumindest einer Routenberechnungseinrichtung zur Berechnung einer Bewegungsroute (19,34) von einem Startpunkt zu einem Zielpunkt,
umfassend die folgenden Verfahrenschritte:
a) Erstellen einer Gesamtkartendarstellung (14, 32, 46, 48) und Erstellen zumindest einer Teilkartendarstellung (15, 33, 47, 49) aus zumindest einem Teil der Kartendaten (1, 6) mittels der Darstellungserzeugungseinrichtung (3);
b) Identifizieren identischer Darstellungselemente (20, 21, 22) der zumindest einen Teilkartendarstellung (15, 33, 47, 49) und der Gesamtkartendarstellung (14, 32, 46, 48);
c) Ausführen von zumindest einem Darstellungsumformungsschritts (11), wobei für identische Darstellungselemente (20, 21, 22) der zumindest einen Teilkartendarstellung und der Gesamtkartendarstellung und/oder für zumindest einen Teil nicht in zumindest der einen Teilkartendarstellung enthaltenen Darstellungselemente (16, 17, 18) der Gesamtkartendarstellung zumindest eine selektive Darstellungsumformung (12) der Gesamtkartendarstellung erfolgt.

## Beschreibung

Die Erfindung betrifft ein Verfahren zum Betrieb eines Navigationssystems, welches die Erstellung und Ausgabe einer geographischen Kartenansicht ermöglicht, die sowohl eine detailgetreue und realitätsnahe Abbildung eines geographischen Gebiets ermöglicht und andererseits ein intuitives Erkennen wichtiger Elemente der Kartendarstellung erlaubt.

Gattungsgemäße Navigationssysteme und Verfahren zur Erstellung und Ausgabe von Kartenansichten sind aus dem Stand der Technik bekannt.

Bei den aus dem Stand der Technik bekannten, gattungsgemäßen Navigationssystemen können allgemein zwei unterschiedliche, mit Nachteilen behaftete Arten von Kartendarstellungen sowie deren Erzeugung und Ausgabe unterschieden werden. Einerseits sind Verfahren zum Betrieb von Navigationssystemen bekannt, die flache, schematisierte, zweidimensionale Kartendarstellungen erzeugen und ausgeben. Derartige Kartendarstellungen haben den Vorteil, dass sie schnell und einfach aus Kartendaten erzeugt werden können, und dass der Benutzer die Informationen der Kartenansicht schnell entnehmen kann. Die Nachteile dieser Kartendarstellungen liegen darin, dass sie äußerst abstrakt den dargestellten Kartenausschnitt, insbesondere die Umgebung der aktuellen Position des Navigationssystems, wiedergeben. Die Ermangelung einer realistischen und detailgetreuen Abbildung eines geographischen Gebiets bzw. der Umgebung des Navigationssystems führt dazu, dass der Benutzer die Kartendarstellung nur schlecht oder gar nicht mit einer geographischen Position bzw. der aktuellen wirklichen Umgebung in Übereinstimmung bringen kann. Dies führt wiederum zu mangelnder Interpretationsfähigkeit oder Fehlinterpretationen von Kartendarstellungen. Damit können insbesondere beim Verfolgen einer Route zu einem Zielpunkt Missinterpretationen von Kartendarstellungen durch den Benutzer zum Abweichen von der vorgeplanten Route führen. Dies wiederum führt zu unnötigen Umwegen, Zeitverlust sowie zusätzlichen Kosten und einem beschränkten Bedienungskomfort des entsprechenden Navigationssystems.

Ebenfalls bekannte, gattungsgemäße Navigationssysteme sehen die Erzeugung und Ausgabe von detailgetreuen, realitätsnahen, vogelperspektivischen Kartendarstellungen vor. Diese Kartendarstellungen sind in der Erzeugung zwar insgesamt aufwendiger, erleichtern es dem Benutzer jedoch ungemein, die eigene geographische Position oder die tatsächliche, wirkliche Umgebung in der Kartendarstellung zu identifizieren. Ein erheblicher Nachteil der detailgetreuen Kartendarstellungen liegt in der Masse der graphisch dargestellten Elemente und einer dadurch verursachten Reizüberflutung des Benutzers. Dem Benutzer fällt es mit zunehmender Komplexität der Kartendarstellungen zunehmend schwerer, die für ihn relevanten, beispielsweise zum Verfolgen einer Route benötigten, Informationen aus der Kartendarstellung zu entnehmen. Dies ist auch deshalb der Fall, weil der Benutzer in aller Regel auch Fahrzeugführer ist, wodurch ein Großteil seiner Aufmerksamkeit auf das Verkehrsgeschehen gerichtet ist und nur ein sehr geringer Bruchteil seiner Aufmerksamkeit bzw. nur sehr kurze Zeitintervalle zum Betrachten von Kartendarstellungen und zur Entnahme von Informationen aus Kartendarstellungen zur Verfügung stehen.

Mit diesem Hintergrund ist es somit Aufgabe der vorliegenden Erfindung, ein Verfahren zum Betrieb eines Navigationssystems zu schaffen, welches die Erzeugung und Ausgabe von Kartenansichten vorsieht, welche sowohl realitätsnah und detailgetreu ein geographisches Gebiet bzw. die Umgebung des Navigationssystems abbilden und damit leicht mit der tatsächlichen Situation in Übereinstimmung gebracht werden können, als auch eine Hervorhebung bzw. Deakzentuierung von besonders wichtigen bzw. unwichtigen Bereichen der Kartendarstellung vorsieht, wodurch die Entnahme der für den Benutzer relevanten Informationen erheblich erleichtert wird.

Diese Aufgabe wird durch ein Verfahren des Anspruchs 1 gelöst. Vorteilhafte Ausführungsformen der Erfindung sind Gegenstand der Unteransprüche.

Das erfindungsgemäße Verfahren beruht auf dem Grundgedanken, dass detailgetreue perspektivische bzw. vogelperspektivische Kartendarstellungen zwar geeignet sind um räumliche Sachverhalte zu vermitteln, diese jedoch mit zunehmender Detailstufe zunehmend unübersichtlicher werden, wodurch es nötig wird, dass die für den Benutzer relevanten Teile der Kartendarstellung hervorgehoben bzw. für den Benutzer unwichtige Bereiche der Kartendarstellung deakzentuiert dargestellt werden. Dies wird in dem erfindungsgemäßen Verfahren dadurch erreicht, dass in einem ersten Verfahrensschritt aus den Kartendaten einer Kartendatenspeichereinrichtung eine Gesamtkartendarstellung und zumindest eine Teilkartendarstellung mittels einer Darstellungserzeugungseinrichtung erstellt werden. Die Kartendatenspeichereinrichtung, in der digitale Kartendaten zur Beschreibung eines geographischen Gebiets gespeichert sind, kann dabei beispielsweise als nicht-flüchtiges Speichermedium ausgelegt sein, welches fest mit dem Navigationssystem verbunden ist oder als Wechselspeichermedium trennbar mit dem Navigationssystem verbunden ist. Die Darstellungserzeugungseinrichtung, welche die Gesamtkartendarstellung und die Teilkartendarstellung erstellt, kann beispielsweise in Form eines Grafikchips bzw. einer zentralen Prozessoreinrichtung (CPU) ausgebildet sein.

Die Bezeichnungen Gesamtkartendarstellung und Teilkartendarstellung beziehen sich für die vorliegende Erfindung nicht auf die Gesamtheit bzw. einen Teil des zur Verfügung stehenden, geographischen Gebiets sondern jeweils auf einen gemeinsamen Teil des geographischen Gebiets. Für die Gesamtkartendarstellung ist dabei vorgesehen, dass sie für das jeweilige geographische Teilgebiet ein Höchstmaß an Realitätsnähe und Detailtreue durch Verwendung der zur Verfügung stehenden Kartendaten aufweist. Dabei sei jedoch erwähnt, dass sich das Höchstmaß an Detailtreue und Realitätsnähe auch auf verschiedene Detailstufen beziehen kann, die damit jeweils für sich dieses Höchstmaß und die entsprechend auszulesenden Kartendaten definieren. Die Teilkartendarstellung wird grundsätzlich aus einem Teil der Kartendaten erstellt, aus denen die Gesamtkartendarstellung hervorgeht. Dies bedeutet insbesondere, dass die Teilkartendarstellung einen Teil des geographischen Gebiets der Gesamtkartendarstellung und/oder andere in der Gesamtkartendarstellung enthaltene Darstellungselemente, wie beispielsweise Richtungspfeile, Piktogramme oder dergleichen, umfasst. Die Teilkartendarstellung wird mit der Maßgabe erstellt, dass sie wichtige Teile der Gesamtkartendarstellung enthält. Mit anderen Worten ausgedrückt umfasst die Teilkartendarstellung diejenigen graphischen Inhalte, welche für den Benutzer von besonders großer Wichtigkeit sind bzw. einen besonders hohen Informationsgehalt haben.

In einem zweiten Verfahrensschritt des erfindungsgemäßen Verfahrens erfolgt die Identifizierung identischer Darstellungselemente der zumindest einen Teilkartendarstellung und der Gesamtkartendarstellung. In welcher Form die zu vergleichenden Darstellungselemente definiert sind, ist grundsätzlich beliebig. Es kann vorgesehen sein, dass die grundlegendste Form der Kartendaten die Darstellungselemente bilden. In diesem Fall bilden je nach Kartendaten Vektoren bzw. Vertices die Darstellungselemente, welche im zweiten Verfahrensschritt auf Identität zwischen der Gesamtkartendarstellung und der Teilkartendarstellung überprüft werden. Aber auch das Zusammenfassen von Kartendaten zu übergeordneten Darstellungselementen und der auf die Identifizierung komplexer identischer Darstellungselemente abzielende Vergleich sind durch das erfindungsgemäße Verfahren vorgesehen.

In einem abschließenden Verfahrensschritt ist es vorgesehen, dass zumindest ein Darstellungsumformungsschritt ausgeführt wird, wobei für identische Darstellungselemente der zumindest einen Teilkartendarstellung und der Gesamtkartendarstellung und/oder für zumindest einen Teil der nicht in zumindest der einen Teilkartendarstellung enthaltenen Darstellungselemente der Gesamtkartendarstellung zumindest eine selektive Darstellungsumformung der Gesamtkartendarstellung erfolgt. Dadurch wird gewährleistet, dass die für den Benutzer informativen bzw. wichtigen Anzeigeninhalte, welche durch die identischen Darstellungselemente beider Kartendarstellungen definiert sind, hervorgehoben werden können. Andererseits ermöglicht die zumindest eine selektive Darstellungsumformung der Gesamtkartendarstellung auch, dass für zumindest einen Teil der Darstellungselemente, für die keine Identität zwischen Gesamtkartendarstellung und Teilkartendarstellung besteht, also ein Teil der Darstellungselemente, die lediglich in der Gesamtkartendarstellung enthalten sind, die Herabsetzung der optischen Signifikanz erfolgen kann. Die so erzeugten Kartendarstellungen können dann mittels zumindest einer Anzeigeeinrichtung des Navigationssytems ausgegeben werden. Bei der Anzeigeeinrichtung kann es sich beispielsweise um einen Bildschirm, insbesondere um ein Touchscreen-Display, handeln. Durch die Verwendung eines Touchscreen-Displays kann die Anzeigeeinrichtung des Navigationssystems zu einer kombinierten Ausgabe und Eingabeeinrichtung weiterentwickelt sein.

Durch eine Positionsermittlungseinrichtung des Navigationssystems ist sichergestellt, dass bei Bedarf die Position des Navigationssystems und damit die entsprechenden Kartendaten zur Erzeugung einer Kartendarstellung der geographischen Umgebung des Navigationssystems bestimmt werden können. Mittels einer Routenberechnungseinrichtung des Navigationssystems ist das Navigationssystem zur Berechnung einer Bewegungsroute von einem Startpunkt zu einem Zielpunkt eingerichtet. Somit bietet das erfindungsgemäße Verfahren für den Benutzer beispielsweise die Möglichkeit, auf einer vorberechneten Bewegungsroute zu einem Zielpunkt unter Berücksichtigung der aktuellen Position vogelperspektivische Kartendarstellungen zu erzeugen und anzuzeigen, aus denen einerseits die für den Fahrer relevanten Informationen schnell und einfach zu entnehmen sind und andererseits räumliche Sachverhalte in bestimmten Bereichen der Kartendarstellungen mit großer Realitätsnähe und Detailtreue dargestellt werden können.

Eine besonders vorteilhafte Ausführungsform des erfindungsgemäßen Verfahrens besteht darin, dass neben einer ersten Darstellungsumformung zumindest eine zweite Darstellungsumformung durchgeführt wird, wobei jede Darstellungsumformung zu einer separaten Gesamtkartendarstellung führt. Bei den separaten Darstellungsumformungen kann insbesondere vorgesehen sein, dass für die selektiv umzuformenden Darstellungselemente jeweils eine horizontale Verschiebung der Darstellungselemente nach rechts bzw. nach links ausgeführt wird. Die so erzeugten zwei separaten Gesamtkartendarstellungen eignen sich besonders für eine innovative Art der Kartendarstellung.

Diese innovative Art der Kartendarstellung wird auf die menschliche Fähigkeit gegründet, räumliche Sachverhalte wahrzunehmen und zu interpretieren. Mit anderen Worten ausgedrückt handelt es sich bei der beschriebenen Ausführungsform um das Erzeugen von Gesamtkartendarstellungen, die vom Betrachter als echte räumliche bzw. dreidimensionale Darstellung wahrgenommen werden können. Durch das Erzeugen unterschiedlicher Bilder für das linke bzw. rechte Auge, in denen einzelne Bildinhalte horizontal gegeneinander versetzt dargestellt sind, wird eine dreidimensionale Darstellung mit einer Tiefenwirkung ermöglicht. Dies geht auf die Tatsache zurück, dass durch den Abstand der menschlichen Augen jedes Auge eine leicht unterschiedliche Abbildung der Umwelt vornimmt, die durch die Weiterverarbeitung im Gehirn so überlagert werden, dass eine tatsächlich räumliche Wahrnehmung gewährleisten wird. Hierbei sei erwähnt, dass es sich bei den separat umgeformten Kartendarstellungen, gemäß der beschriebenen Ausführungsform des erfindungsgemäßen Verfahrens, nicht um weiterentwickelte, vogelperspektivische, zweidimensionaler Kartendarstellungen handelt, sondern um Kartendarstellungen, die das tatsächliche Empfinden von Räumlichkeit für den Betrachter ermöglichen.

Ein solcher Tiefeneindruck eignet sich hervorragend, um wichtige bzw. informative Elemente einer Kartendarstellung hervorzuheben. Dabei ist die Effektivität der Hervorhebung besonders groß, wenn nicht die gesamte, aus zwei separat umgeformten Gesamtkartendarstellungen aufgebaute, Kartendarstellung einen gleichmäßigen räumlichen Tiefeneindruck für den Betrachter entfaltet, sondern wenn eine abgestufte und/oder teilweise räumliche Wahrnehmung in der Gesamtkartendarstellung erzeugt wird. Der Unterschied in der Wahrnehmung einer einfachen zweidimensionalen Darstellung und einer echten dreidimensionalen Darstellung ist so gravierend unterschiedlich, dass eine sehr deutliche Akzentuierung der Gesamtkartendarstellung möglich ist. Zudem erfolgt die Wahrnehmung der räumlich akzentuierten Darstellungselemente ohne jede benutzerseitige Anstrengung, da Augen und Gehirn des Benutzers an die Wahrnehmung und Interpretation derartiger Darstellungen überaus gewöhnt sind. Daher sieht eine vorteilhafte Ausgestaltung des erfindungsgemäßen Verfahrens vor, dass sich zwei separate, mittels Darstellungsumformung erzeugte, Gesamtkartendarstellungen mittels der Anzeigeeinrichtung derart anzeigen lassen, dass eine Gesamtkartendarstellung mit Tiefeneindruck, insbesondere eine für den Menschen tatsächlich dreidimensional wahrnehmbare Gesamtkartendarstellung, ermöglicht wird.

Auf welche Art und Weise die Anzeige einer Gesamtkartendarstellung mit Tiefeneindruck auf der Anzeigeneinrichtung ermöglicht wird, ist grundsätzlich beliebig. Besonders vorteilhaft ist jedoch, wenn zwei separate, mittels Darstellungsumformung erzeugte, Gesamtkartendarstellungen mittels einer stereoskopischen Anzeigeeinrichtung zur Anzeige gebracht werden können. Die dafür benötigte, selektive Verschiebung der einzelnen Darstellungselemente wird allgemein Parallaxe genannt. Die zwei Bilder, die zur Erzeugung derartiger Raumbilder benötigt werden, heißen stereoskopische Halbbilder. Für die Anzeige bietet sich unter den verschiedenen wirklich 3D-fähigen Anzeigeeinrichtungen bzw. Bildschirmen besonders die Darstellung mittels einer autostereoskopischen Anzeigeeinrichtung an. Dies ist darin begründet, dass für den Benutzer keinerlei weitere Hilfsmittel bzw. Einrichtungen, wie beispielsweise 3D-Brillen oder Shutterbrillen, benötigt werden, um eine dreidimensionale, mit Tiefeneindruck versehene Kartendarstellung wahrnehmen zu können. Auch hat eine Anzeige mittels einer autostereoskopischen Anzeigeeinrichtung den Vorteil, dass Betrachter, die sich außerhalb des stereoskopischen Betrachtungsbereichs der Anzeigeeinrichtung befinden und beispielsweise nur eine der umgeformten Gesamtkartendarstellungen mit beiden Augen wahrnehmen, nach wie vor die Gesamtkartendarstellung, wenn auch ohne Tiefeneindruck, wahrnehmen können.

Die Art und Weise, in der die Darstellungsumformung erfolgt, ist grundsätzlich beliebig. In einer vorteilhaften Ausführungsform des erfindungsgemäßen Verfahrens ist jedoch vorgesehen, dass die Hervorhebung der wichtigen Teile der Kartendarstellung bzw. die optische Deakzentuierung unwichtiger Teile der Kartendarstellung mittels der selektiven Darstellungsumformung durch Punktoperationen, lokale Operationen und/oder globale Operationen durchgeführt wird. Zu den grundsätzlich bekannten Punktoperationen gehören beispielsweise partielles Auslöschen von Bildelementen, einfach Abdunklung von Farbwerten, Grauwertbildung und die Bildung negativer Farbwerte. Die Anwendung von Unschärfefilter und Mosaikfilter sind bekannte Anwendungen von lokalen Operationen. Insbesondere die Unschärfefilter können auf unterschiedlichen mathematischen Beschreibungen basieren. So sind beispielsweise Mittelwertfilter, Medianfilter und Crossfilter bekannt. Als Beispiel einer globalen Operation seien Stilisierungstechniken bzw. nicht fotorealistische Ränderungstechniken, wie Stripling oder Hatching, genannt. Dabei können zur Darstellungsumformung verschiedene Operationen der einzelnen Kategorien sowie verschiedene Operationen unterschiedlicher Kategorien miteinander kombiniert werden. Zudem kann natürlich auch vorgesehen sein, dass die beschriebenen Operationen, welche bei der Hervorhebung bzw. Deakzentuierung von zweidimensionalen, beispielsweise vogelperspektivischen Gesamtkartendarstellungen zum Einsatz kommen können, auch bei der selektiven zweiteiligen Darstellungsumformung zur Erzeugung echt dreidimensionaler Gesamtkartendarstellungen Verwendung finden können. Ob sie dabei einen direkten Einfluss auf die Tiefenwirkung oder einen Einfluss auf zusätzliche Hervorhebungsmaßnahmen, wie beispielsweise das zusätzliche Deakzentuieren unwichtiger und nicht mit Tiefeneindruck versehener Darstellungselemente, haben, ist dabei beliebig.

Da die Teilkartendarstellung die für den Benutzer informativen bzw. wichtigen Darstellungselemente enthält, sieht eine Ausführungsform des erfindungsgemäßen Verfahrens vor, dass die Teilkartendarstellung Darstellungselemente umfasst, die zumindest einen Teil der Bewegungsroute von einem Startpunkt zu einem Zielpunkt beschreiben. Insbesondere während der Zielführung zu einem Zielpunkt entlang einer vorberechneten Bewegungsroute stellt die Route an sich und die unmittelbare Umgebung der Fahrroute einen hochgradig informativen und wichtigen Teil jeder Kartendarstellung dar. Deshalb ist es besonders vorteilhaft, wenn Teile der Bewegungsroute und gegebenenfalls die direkt angrenzende Umgebung der Bewegungsroute von der Teilkartendarstellung umfasst werden. Welcher Teil der Bewegungsroute in der Teilkartendarstellung enthalten ist, richtet sich dabei in erster Linie nach der aktuellen Position des Navigationssystems sowie dem Betriebszustand des Navigationssystems. Beispielsweise können beim Befahren unterschiedlicher Straßenklassen unterschiedliche Betriebsarten des Navigationssystems aktiviert werden, die einen Einfluss auf die Kartendaten haben. Für die Erzeugung und Anzeige von zumindest teilweise mit einem echten Tiefeneindruck versehenen Gesamtkartendarstellungen kann dementsprechend vorgesehen sein, dass entlang einer zu verfolgenden Bewegungsroute zu einem Zielpunkt die Kartendarstellung einen Tiefeneindruck hervorruft, wohingegen Bereiche der Kartendarstellung, die sich abseits der zu befahrenden Bewegungsroute befinden, ohne einen derartigen Tiefeneindruck dargestellt werden.

Sowohl bei aktivierter Zielführung bzw. dem Verfolgen einer Bewegungsroute zu einem Zielpunkt als auch bei deaktivierter Zielführung sind Sonderziele, die in verschiedensten Formen in der Kartendarstellung enthalten sein können, von besonderer Wichtigkeit für den Benutzer. Deshalb sieht eine vorteilhafte Ausgestaltung des erfindungsgemäßen Verfahrens vor, dass die Teilkartendarstellung zumindest das Darstellungselement bzw. die Darstellungselemente umfasst, die ein Sonderziel beschreiben. Dies gilt insbesondere für die Darstellungselemente, die ein Sonderziel in Form eines Sonderziel-Icons bzw. Point-of-Interest Icons beschreiben. Alternativ können jedoch auch Darstellungselemente, die ein Gebäude eines Sonderziels beschreiben, in der Teilkartendarstellung enthalten sein. Auch hier ist ein entsprechendes Vorgehen für die Hervorhebung mittels räumlich wahrnehmbaren Darstellungselementen möglich. Die Aufmerksamkeit des Benutzers für Sonderziel-Icons oder für Sonderzielgebäude kann durch eine räumliche wahrnehmbare Darstellung oder Abhebung von anderen Darstellungselementen der Gesamtkartendarstellung deutlich erhöht werden.

Da es überaus vorteilhaft ist, wenn die in der Teilkartendarstellung enthaltenen Darstellungselemente nicht uniform umgeformt werden, sondern je nach Wichtigkeit der jeweiligen Darstellungselemente der Teilkartendarstellung für den Benutzer eine individuelle Umformung vorgesehen ist, bezieht sich das erfindungsgemäße Verfahren auch darauf, dass das Erstellen einer Teilkartendarstellung einen Vorgang umfasst, mit dem den dargestellten Darstellungselementen zumindest teilweise ein Umformungsparameter zugewiesen werden kann. Damit wird ermöglicht, dass die Umformung der Gesamtkartendarstellung optimal an die Art der Kartendarstellung und an die in der Teilkartendarstellung enthaltenen Darstellungselemente angepasst wird. Beispielsweise kann durch eine geeignete Zuordnung von Umformungsparametern zu den Darstellungselementen der Teilkartendarstellung eine unterschiedliche Hervorhebung einer geplanten Bewegungsroute und der in der Nähe der Bewegungsroute befindlichen Sonderziele erreicht werden.

Für eine optimale Anpassung der Gesamtkartendarstellung ist es wünschenswert, dass bei der graphischen Hervorhebung wichtiger Teile der Kartendarstellung bzw. bei der graphischen Deakzentuierung weniger wichtiger Darstellungselemente der Kartendarstellung ein fließender Übergang zwischen den einzelnen Bereichen geschaffen wird. Dies erleichtert in hohem Maße die Ablesbarkeit der Kartendarstellung bzw. die Identifizierung wichtiger Bereiche der Kartendarstellung. Eine Ausführungsform des erfindungsgemäßen Verfahrens sieht deshalb vor, dass das Erstellen einer Teilkartendarstellung einen Vorgang umfasst, mit dem, ausgehend von mit Umformungsparametern versehenen Darstellungselementen, Umformungsparameter in der Teilkartendarstellung definiert werden können, wobei die Umformungsparameter auch Bereiche der Teilkartendarstellung betreffen können, die keine Darstellungselemente enthalten. Mit anderen Worten ausgedrückt bedeutet dies, dass es mit einer relativ geringen Anzahl von Darstellungselementen, denen ein Umformungsparameter zugewiesen wurde, es möglich ist, einen glatten bzw. stetigen Verlauf von Umformungsparametern zu erstellen. Insbesondere die Ausdehnung des Umformungsparameterverlaufs auf Bereiche der Teilkartendarstellung, welche keine Darstellungselemente der ursprünglichen Teilkartendarstellung enthalten, sorgt bei der selektiven Darstellungsumformung dafür, dass ein fließender Übergang zwischen optisch hervorgehobenen und optisch nicht hervorgehobenen Bereichen der Kartendarstellung bzw. optisch nicht hervorgehobenen und optisch deakzentuierten Bereichen der Kartendarstellung entsteht.

Ob durch eine Erweiterung der Umformungsparameter die Darstellungselemente der Teilkartendarstellung erweitert werden, oder ob die erweiterten Umformungsparameter lediglich einen Einfluss auf den Vergleich der Teilkartendarstellung und der Gesamtkartendarstellung ausüben, indem die Darstellungselemente der Gesamtkartendarstellung, die den erweiterten Bereich der Umformungsparameter der Teilkartendarstellung betreffen, in gewisser Weise auch als in beiden Kartendarstellungen identische Darstellungselemente identifiziert werden, ist letztlich nicht von übergeordneter Bedeutung.

Um Darstellungsumformungen möglichst schnell und möglichst ressourcenschonend durchführen zu können, ist es besonders sinnvoll, wenn eine Darstellungsumformung in Abhängigkeit einer Umformungsvorschrift erfolgt, wobei die Umformungsparameter Eingang in die Umformungsvorschrift finden. Dadurch wird vermieden, dass die Umformung jedes einzelnen, in der Gesamtkartendarstellung enthaltenen Darstellungselements für sich erfolgen muss. Andererseits wird durch die Abhängigkeit vom Umformungsparameter sichergestellt, dass für bestimmte Bereiche bzw. bestimmte Darstellungselemente eine selektive Umformung erfolgen kann. Bei der zweiteiligen Darstellungsumformung zur Erzeugung zumindest teilweise dreidimensionaler Gesamtkartendarstellungen kann vorgesehen sein, dass sich jede Darstellungsumformung auf eine eigene Umformungsvorschrift bezieht. Dabei bietet sich die Verwendung zweier separater Umformungsvorschriften vor allem auch deshalb an, da die Verschiebung der einzelnen Darstellungselemente nach rechts bzw. links in gleichem Maße erfolgt. Dadurch kann mittels eines, in der Umformungsvorschrift enthaltenen, Richtungsfaktors die jeweils erste bzw. zweite Umformungsvorschrift aus der jeweils anderen besonders schnell abgeleitet werden. Aber auch eine Verwendung einer einzigen Umformungsvorschrift, in der ein derartiger Richtungsfaktor bei der jeweiligen Darstellungsumformung angepasst wird, ist möglich.

Von welchen Umständen oder Eigenschaften der Umformungsparameter abhängt, ist grundsätzlich beliebig. Bei dreidimensionalen Kartendarstellungen ist es jedoch besonders vorteilhaft, wenn es sich bei dem Umformungsparameter um einen Tiefenwert handelt. Damit kann eine selektive Umformung der Gesamtkartendarstellung derart erfolgen, dass wichtige bzw. informative Teile der Kartendarstellung eine wirklich räumliche Akzentuierung erfahren. Aber auch bei der Umformung zweidimensionaler Kartendarstellungen kann die Definition eines Umformungsparameters als Tiefenwert durchaus nützlich für das vorgeschlagene Verfahren sein. Der Unterschied liegt hauptsächlich darin, dass bei der selektiven Umformung einer zweidimensionalen Gesamtkartendarstellung andere Hervorhebungs- bzw. Deakzentuierungsmethoden zum Einsatz kommen.

Dazu kann vorgesehen sein, dass einem Darstellungselement ein Tiefenwert in Abhängigkeit der räumlichen Position des Darstellungselements zugewiesen werden kann. Damit kann in wichtigen bzw. hervorhebenswerten Bereichen der Kartendarstellung der räumliche Eindruck verbessert bzw. die Hervorhebung intensiviert und dadurch die Aufmerksamkeit des Benutzers gelenkt werden. Dies trägt ebenfalls dazu bei, dass wichtige Informationen bzw. wichtige Bereiche der Kartendarstellung vom Benutzer schnell und einfach wahrgenommen werden können. Beispielsweise können bei vogelperspektivischen Kartendarstellungen, bei denen die Darstellungselemente auf einen Fluchtpunkt oder dergleichen zulaufen, Darstellungselemente im unteren Teil der Kartendarstellung, die weiter vom Fluchtpunkt entfernt sind und deshalb mit einer relativ höheren räumlichen Auflösung dargestellt werden können, geringer hervorgehoben werden als im oberen Teil der Kartendarstellung, in dem die Darstellungselemente entsprechend näher am Fluchtpunkt sind und deshalb mit geringerer räumlicher Auflösung dargestellt werden können. Andererseits kann die Abhängigkeit des Tiefenwertes von der räumlichen Position eines Darstellungselements auch für eine der tatsächlichen Situation nachgebildete Tiefenwirkung verwendet werden. Die selektive Darstellungsumformung bzw. das Maß der Verschiebung der jeweiligen Darstellungselemente kann dabei in Abhängigkeit vom Tiefenwert des Darstellungselements erfolgen. Somit werden für die angezeigten echt dreidimensionalen Kartendarstellungen Tiefenverhältnisse geschaffen, die denen der Realität entsprechen oder zumindest nahe kommen.

Neben einer Tiefenwertabhängigkeit von räumlichen oder sonstigen Gegebenheiten der darzustellenden Kartenansicht ist es außerdem besonders vorteilhaft, wenn der Tiefenwert einheitlich für verschiedene Darstellungselementklassen definiert werden kann. Als Darstellungselementklassen sind dabei Zusammenschlüsse von Darstellungselementen zu verstehen, die bezüglich bestimmter Eigenschaften übereinstimmen. Beispielsweise können Darstellungselemente, die ein Gebäude darstellen, zu einer Darstellungselementklasse zusammengefasst werden. Weiter können auch Darstellungselemente, die Straßensegmente oder Sonderziele bzw. Sonderziel-Icons darstellen, zu einer jeweiligen Darstellungsklasse zusammen gefasst werden. Durch eine Zuweisung des Tiefenwerts in Abhängigkeit von der Darstellungselementklasse lassen sich Hervorhebungen bzw. Deakzentuierungen realisieren, die für den Benutzer besonders intuitiv wahrgenommen werden können. So ist beispielsweise eine einheitliche Hervorhebung von Sonderziel-Icons möglich, durch die der Benutzer nicht nur auf die einzelnen Sonderziele aufmerksam gemacht wird, sondern auch die Zusammengehörigkeit bzw. den gemeinsamen Bezug der gemeinsam hervorgehobenen Darstellungselemente erfasst. Auch dies gilt für dreidimensionale Hervorhebungen im gleichen Maße wie für die Umformung zweidimensionaler Gesamtkartenansichten. Durch die Möglichkeit, eine Kartendarstellung mit einem Tiefeneindruck zu versehen, wird auch die Möglichkeit eröffnet, bestimmte Darstellungselemente, die der gleichen Darstellungselementklasse zugeordnet sind, vom Rest der Kartendarstellung abgehoben darzustellen. Diese Möglichkeit bietet sich insbesondere für die Darstellung von Symbolen, wie beispielsweise Richtungspfeilen oder Icons von Sonderzielen, an. Im Folgenden wird die Erfindung anhand von schematischen Zeichnungen, welche lediglich Ausführungsbeispiele zeigen, näher erläutert.

Es zeigen:
- Fig. 1: schematische Darstellung eines bekannten Verfahrens zum Erzeugen und Ausgeben einer Kartendarstellung;
- Fig. 2: schematische Darstellung des erfindungsgemäßen Verfahrensablaufs;
- Fig. 3: schematisierte Darstellung einer Gesamtkartendarstellung sowie einer Teilkartendarstellung;
- Fig. 4: schematisierte Darstellung einer Kartendarstellung, welche mit dem erfindungsgemäßen Verfahren erzeugt wurde;
- Fig. 5: schematisierte Darstellung des erfindungsgemäßen Verfahrensablaufs zur Erzeugung und Ausgabe partiell stereoskopischer Halbbilder und daraus erzeugte stereoskopische Kartendarstellungen;
- Fig. 6: schematisierte Darstellung einer Teilkartendarstellung sowie der Umformungsparameter und der erweiterten Umformungsparameter der Teilkartendarstellung;
- Fig. 7: Gesamtkartendarstellung und Teilkartendarstellung, welche eine Bewegungsroute umfassen, als Ausgangspunkt des erfindungsgemäßen Verfahrens;
- Fig. 8: mittels verschiedener Verfahren umgeformte Gesamtkartendarstellungen der Fig. 7;
- Fig. 9: Veranschaulichung eines Umformungsparameterverlaufs anhand einer Grauwertdarstellung einer Teilkartendarstellung;
- Fig. 10: selektiv umgeformte Gesamtkartendarstellungen, welche mit auf leere Bereiche der Detailkartendarstellung erweiterte Umformungsparameterverläufe umgeformt wurden;
- Fig. 11: zwei separate, mittels Darstellungsumformung erzeugte, Gesamtkartendarstellungen zur Erzeugung einer stereoskopischen Gesamtkartendarstellung;
- Fig. 12: Gesamtkartendarstellung und Teilkartendarstellung, welche Sonderziel-Icons umfassen, als Ausgangspunkt des erfindungsgemäßen Verfahrens;
- Fig. 13: zwei separate, mittels Darstellungsumformung erzeugte Gesamtkartendarstellungen zur Erzeugung einer stereoskopischen Kartendarstellung, wobei die Point-of-Interest Icons durch einen Tiefeneindruck vom Rest der Kartendarstellung abgehoben sind.

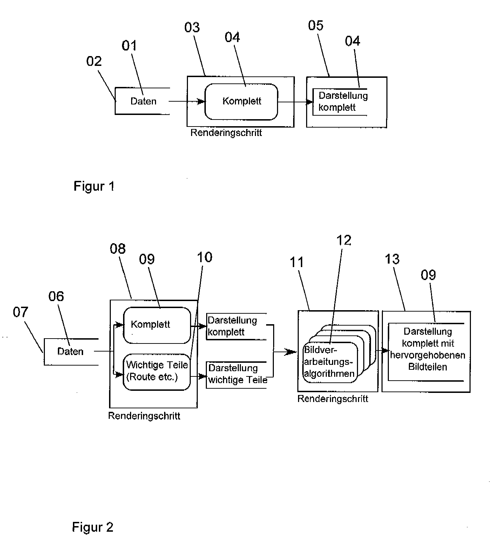

Fig. 1 zeigt ein bekanntes Verfahren zum Betrieb eines Navigationssystems, welches die Erzeugung und Ausgabe einer Kartendarstellung umfasst. Im ersten Verfahrensschritt werden Kartendaten 01 aus einer Kartendatenspeichereinrichtung 02 in eine Darstellungserzeugungseinrichtung 03 geladen, in der die Gesamtkartendarstellung 04 erzeugt wird. Nach der Weiterleitung der Gesamtkartendarstellung an die Anzeigeeinrichtung 05 erfolgt die Anzeige der Gesamtkartendarstellung 04 im abschließenden Verfahrensschritt. Wie aus Fig. 1 hervorgeht, sehen bekannte Verfahren keine Hervorhebungs- und/oder Akzentuierungs- bzw. Deakzentuierungsschritte vor. Insbesondere bei detailgetreuen realitätsnahen perspektivischen Kartendarstellungen führt dies dazu, dass der Benutzer die relevanten und wichtigen Informationen nur mit großer Mühe bzw. übermäßigem Zeitaufwand aus der Kartendarstellung entnehmen kann.

Fig. 2 zeigt die schematisierte Darstellung des Verfahrensablaufs des erfindungsgemäßen Verfahrens. Auch hier werden zunächst Kartendaten 06 aus einer Kartendatenspeichereinrichtung 07 geladen. Diese Kartendaten 06 werden in die Darstellungserzeugungseinrichtung 08 geladen, wobei jedoch im Gegensatz zu bekannten Verfahren neben einer Gesamtkartendarstellung 09 auch eine Teilkartendarstellung 10 erzeugt wird. In einem weiteren Verfahrensschritt werden die Gesamtkartendarstellung 09 und die Teilkartenansicht 10 zunächst auf identische Darstellungselemente untersucht. Nachdem Identifizieren identischer Darstellungselemente wird in einem Verfahrensschritt ein Darstellungsumformungsschritt 11 ausgeführt, wobei für identische Darstellungselemente der zumindest einen Teilkartendarstellung 10 und der Gesamtkartendarstellung 09 und/oder für zumindest einen Teil nicht in zumindest der einen Teilkartendarstellung 10 enthaltenen Darstellungselemente der Gesamtkartendarstellung 09 zumindest eine selektive Umformung 12 der Gesamtkartendarstellung erfolgt. Die selektiv umgeformte Gesamtkartendarstellung 09 wird anschließend an die Anzeigeeinrichtung 13 weitergeleitet und mit dieser für den Benutzer dargestellt.

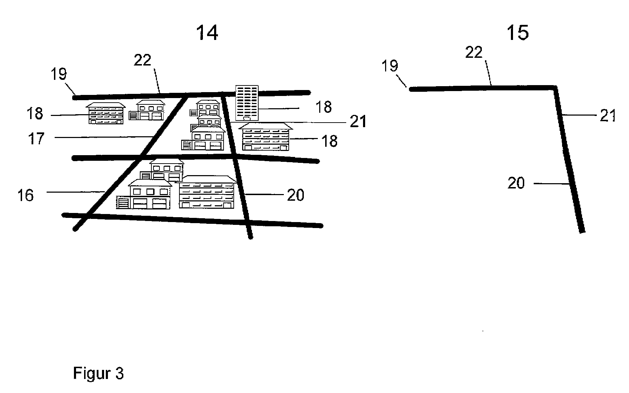

Die Fig. 3 zeigt eine schematisierte Darstellung einer Gesamtkartendarstellung 14 sowie die schematisierte Darstellung einer Teilkartendarstellung 15. Die Gesamtkartendarstellung 14 besteht aus Darstellungselementen eines Teils des in der Kartendatenspeichereinrichtung digital gespeicherten geographischen Gebiets. Neben den Darstellungselementen 16 und 17, die Straßenabschnitte im geographischen Gebiet der Gesamtkartendarstellung 14 darstellen, sind schematisiert dargestellte Gebäude 18 als weitere Darstellungselemente in der Gesamtkartendarstellung enthalten. Auch wenn die Gesamtkartendarstellung 14 der Fig. 3 nur ein geringes Maß an Realitätsnähe und Detailtreue aufweist, so wird doch deutlich, dass mit zunehmender Anzahl der Darstellungselemente 16, 17, 18 die Gesamtkartendarstellung 14 zunehmend unübersichtlicher wird, wodurch die für den Benutzer relevanten Informationen schwieriger zu entnehmen sind. Die vorberechnete Bewegungsroute 19 entlang der Streckenabschnitte 20, 21 und 22 ist für den Benutzer in dem kurzen Zeitraum, der ihm zur Verfügung steht, um die wichtigen Informationen der Kartendarstellung zu entnehmen, nur schwerlich zu identifizieren. Daher beinhaltet die Teilkartendarstellung 15 lediglich die Darstellungselemente 20, 21 und 22, welche die Streckenabschnitte entlang der vorberechneten Bewegungsroute 19 darstellen.

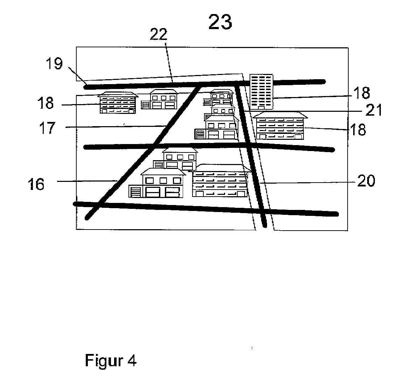

Anhand des Vergleichs der Darstellungselemente der Teilkartendarstellung mit der Gesamtkartendarstellung und der selektiven Umformung der Gesamtkartendarstellung kann eine deutliche Verbesserung der Kartendarstellung bezüglich Informationsgehalt und Ablesbarkeit bzw. Informationsentnahme erreicht werden. Das Ergebnis, welches nach Durchlaufen des erfindungsgemäßen Verfahrens als Gesamtkartendarstellung auf der Basis der Gesamtkartendarstellung 14 der Teilkartendarstellung 15 auf einer Anzeigeeinrichtung zur Anzeige kommen könnte, ist in Fig. 4 dargestellt.

Fig. 4 zeigt eine selektiv umgeformte Gesamtkartendarstellung 23 auf Basis der Kartendarstellungen der Fig. 3, für die eine Deakzentuierung aller Darstellungselemente der Gesamtkartendarstellung 14 erfolgt ist, für die keine Identität mit den Darstellungselementen der Teilkartendarstellung 15 identifiziert werden konnte. Im Beispiel der Fig. 4 ist als Mittel zur Deakzentuierung der nicht identischen Darstellungselemente der Gesamtkartendarstellung 14 und der Teilkartendarstellung 15 eine Abdunklung der Farbwerte gewählt worden. Die identischen Darstellungselemente, nämlich die Darstellungselemente 20, 21 und 22 entlang der vorberechneten Bewegungsroute 19, treten visuell eindeutig hervor und erleichtern somit die Identifizierung der wichtigen Teile der umgeformten Gesamtkartendarstellung 23. Andererseits sind die weiteren Darstellungselemente 16, 17 und 18 nach wie vor, wenn auch visuell abgeschwächt, in der umgeformten Gesamtkartendarstellung 23 enthalten, wodurch die räumliche Gesamtsituation der umgeformten Gesamtkartendarstellung 23 für den Benutzer weiterhin leicht erfassbar bleibt und sich dieser beispielsweise an den Darstellungselementen 18 einfach orientieren kann.

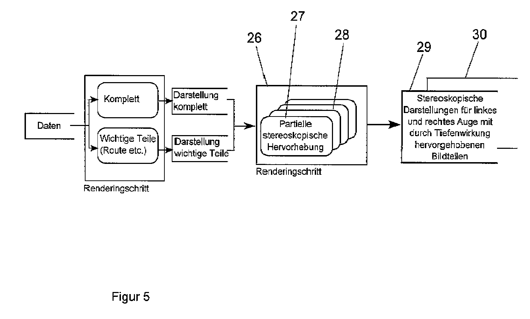

Fig. 5 zeigt einen schematischen Verfahrensablauf des erfindungsgemä-βen Verfahrens, wobei im Darstellungsumformungsschritt 26 neben einer ersten Darstellungsumformung 27 zumindest eine zweite Darstellungsumformung 28 der gesamten Kartendarstellung durchgeführt wird, wobei jede Darstellungsumformung mittels einer separaten Umformungsvorschrift ausgeführt wird und zu einer separaten Gesamtkartendarstellung 29, 30 führt. Mittels der separaten Umformungsvorschriften, die von den jeweiligen Tiefenwerten bzw. Umformungsparametern abhängig sind, entstehen somit zwei Gesamtkartendarstellungen, in denen mit einem Tiefenwert bzw. Umformungsparameter versehene Darstellungselemente in Abhängigkeit vom Tiefenwert bzw. Wert des Umformungsparameters relativ zueinander verschoben sind, wobei die so entstandenen stereoskopischen Halbbilder 29, 30 mit geeigneten Mitteln, wie beispielsweise einem autostereoskopischen Bildschirm, als stereoskopische Gesamtkartendarstellung zur Anzeige gebracht werden können.

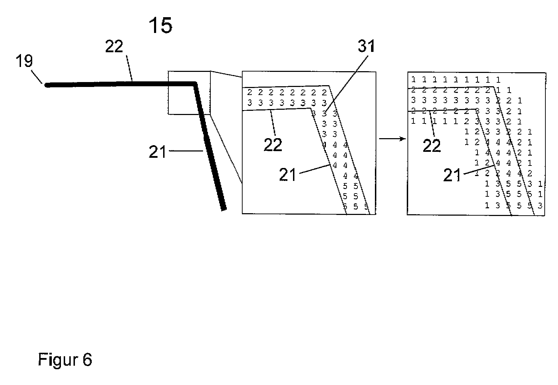

Fig. 6 zeigt im linken Teil erneut die Teilkartendarstellung 15 der Fig. 3. Für einen Ausschnitt der Bewegungsroute 19, welcher sich am Übergang zwischen den Darstellungselementen 21 und 22 befindet, sind im mittleren Teil der Fig. 6 beispielhaft die Umformungsparameter 31 dargestellt. Für die Darstellungselemente 21 und 22 können die jeweiligen Umformungsparameter 31 in die selektive Umformung der Kartendarstellung mit eingehen. Dabei können die Umformungsparameter entweder ein Gradmesser für die Hervorhebung der Darstellungselemente 21 und 22 sein oder aber als Tiefenwerte interpretiert werden. Bei der Interpretation der Umformungsparameter 31 als Tiefenwerte für eine stereoskopische Gesamtkartendarstellung gehen die Tiefenwerte derart in die Umformungsvorschrift zur jeweiligen Darstellungsumformung der Gesamtkartendarstellung ein, dass durch die Tiefenwerte das Maß der relativen Verschiebung bzw. Parallaxe der Darstellungselemente 21 und 22 vorgegeben wird. Im mittleren Teil der Fig. 6 kann beispielsweise vorgesehen sein, dass ein geringer Tiefenwert zu einer relativ großen horizontalen Verschiebung des Darstellungselements führt und umgekehrt.

Im rechten Teil der Fig. 6 ist für den Ausschnitt der Teilkartendarstellung 15 am Übergang der Darstellungselemente 21 und 22 eine Erweiterung bzw. Glättung der Umformungsparameter 31 erfolgt. Wie aus dem rechten Teil der Fig. 6 hervorgeht, wird durch die Glättung der Umformungsparameter auch ein Teil der Teilkartendarstellung mit Umformungsparametern versehen, in denen sich zunächst keine Darstellungselemente der Teilkartendarstellung 15 befanden. Dies ist dadurch erkenntlich, dass die Umformungsparameter über die Begrenzung der Darstellungselemente 21 und 22 hinausgehen.

Eine derartige Erweiterung bzw. Glättung des Verlaufs der Umformungsparameter hat den Vorteil, dass in der selektiv umgeformten Kartendarstellung bzw. in den selektiv umgeformten Gesamtkartendarstellungen ein stetiger fließender Verlauf zwischen hervorgehobenen und nicht hervorgehobenen Darstellungselementen bzw. ein fließender Verlauf von Darstellungselementen mit Tiefeneindruck und Darstellungselementen ohne Tiefeneindruck erzeugt werden kann. Die Erweiterung bzw. Glättung der Umformungsparameter erfolgt dabei ausgehend von den mit Umformungsparametern versehenen Darstellungselementen, wie beispielsweise derer aus dem mittleren Teil der Fig. 6, anhand von grundsätzlich bekannten Methoden, wie beispielsweise Gaußfilter oder Mittelwertfilter. Wichtig ist dabei, dass die erweiterten Umformungsparameter bzw. die mit erweiterten Umformungsparametern versehene Teilkartendarstellung in irgendeiner Weise Eingang in den Vergleich bzw. die Identitätsprüfung der Gesamtkartendarstellung und der Teilkartendarstellung finden. Blieben die erweiterten Umformungsparameter dabei außen vor, könnten sie keinen Einfluss auf eine selektive, fließende Umformung ausüben und wären somit unnütz.

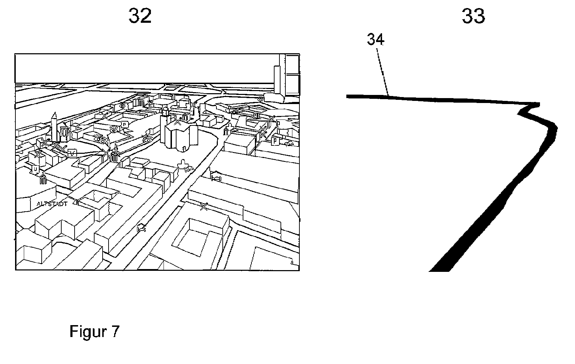

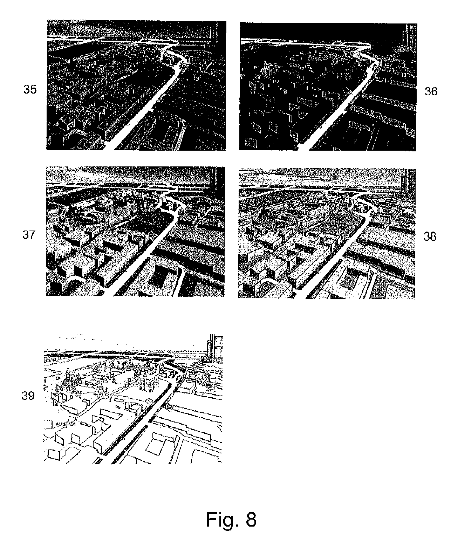

Fig. 7 zeigt ebenfalls eine Gesamtkartendarstellung 32 in der linken Hälfte der Figur sowie eine Teilkartendarstellung 33 in der rechten Hälfte der Figur. In gewisser Hinsicht kann die Fig. 7 als Weiterentwicklung der Fig. 3 bezüglich des durch das erfindungsgemäße Verfahren zu lösende Problem verstanden werden. Die Gesamtkartendarstellung 32 der Fig. 8 entspricht, im Gegensatz zur Gesamtkartendarstellung 14 der Fig. 3, in etwa dem Stand der Technik bei der Erzeugung und Ausgabe von vogelperspektivischen, detailgetreuen Kartendarstellungen für Navigationszwecke. Die Zunahme der Unübersichtlichkeit der Gesamtkartendarstellung 32 in Fig. 7 gegenüber der Gesamtkartendarstellung 14 in Fig. 3 ist unübersehbar. Der Benutzer eines Navigationssystems hat beim Anblick einer Kartendarstellung, wie der Gesamtkartendarstellung 32, erhebliche Probleme in kurzer Zeit die zur Navigation bzw. zur Zielführung relevanten Informationen aus der Kartendarstellung zu entnehmen. Im Gegensatz dazu enthält die Teilkartendarstellung 33 in Fig. 7 ausschließlich die vorberechnete Bewegungsroute 34. Würde eine, auf einer Anzeigeeinrichtung ausgegebene Kartendarstellung entsprechend der Teilkartendarstellung 33 ausfallen, so wäre es dem Benutzer zwar ohne Weiteres sofort möglich, die wichtigen Informationen, in diesem Fall die einzigen dargestellten Informationen, aus der Kartendarstellung zu entnehmen. Der Benutzer sähe sich aber andererseits dem Problem gegenüber, dass die entnommenen Informationen nur schwer oder gar nicht in die reelle Umgebung übertragbar und somit in einen Kontext zu bringen wären. Das erfindungsgemäße Verfahren überwindet diese Nachteile unter Vereinigung der jeweiligen Vorteile der in Fig. 7 dargestellten Kartendarstellungen. Durch die selektive Umformung der Gesamtkartendarstellung 32 nach Maßgabe der Darstellungselemente der Teilkartendarstellung 33 wird eine Gesamtkartendarstellung erzeugt, welche die einfache Orientierung und die schnelle Entnahme wichtiger Informationen erlaubt.

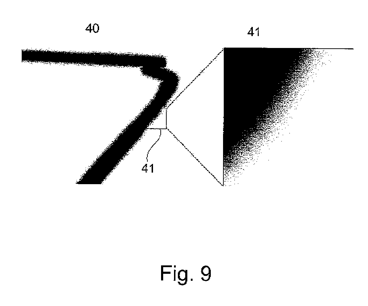

Für die Gesamtkartendarstellung 32 und die Teilkartendarstellung 33 der Fig. 7 sind in der Fig. 8 fünf verschiedene Methoden zur Umformung der Gesamtkartendarstellung 32 beispielhaft dargestellt. In den beispielhaften Darstellungen ist die selektive Umformung der Gesamtkartendarstellung 32 auf die Darstellungselemente begrenzt, welche nicht in der Teilkartendarstellung 33 der Fig. 7 enthalten sind. Bei den Umformungsmethoden handelt es sich von links nach rechts und von oben nach unten um eine Abdunklung 35, eine Negativbildbildung 36, einen Unschärfefilter 37, einen Pinselstrichzeichnungseffekt 38 sowie einen Bleistiftzeichnungseffekt 39. Jede einzelne der beispielhaft abgebildeten selektiv umgeformten Gesamtkartendarstellungen der Fig. 8 weist augenscheinlich die Vorteile des erfindungsgemäßen Verfahrens auf. Neben einer detaillierten und realitätsnahen Kartendarstellung, welche eine einfache Identifikation der räumlichen Umgebung erlaubt, ist die zu verfolgende, vorberechnete Bewegungsroute deutlich und einfach zu erkennen. Für die selektive Umformung der Gesamtkartendarstellung der Fig. 8 ist die selektive Umformung für alle Darstellungselemente, die nicht Teil der Teilkartendarstellung sind, in gleicher Weise durchgeführt worden. Dadurch ergibt sich ein mitunter deutlicher Übergang zwischen umgeformten und nicht umgeformten Darstellungselementen. Eine Möglichkeit, wie ein fließender Übergang zwischen umgeformten und nicht umgeformten Darstellungselementen erzeugt werden kann, ist in Fig. 9 schematisch dargestellt.

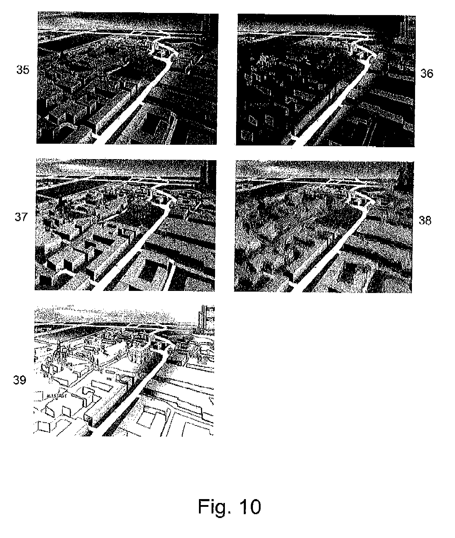

Fig. 9 zeigt einen Teil einer Teilkartendarstellung 40 sowie einen daraus exemplarisch vergrößerten Bereich 41. Die in Fig. 10 dargestellte Teilkartendarstellung 40 stellt eine Erweiterung der Teilkartendarstellung 34 der Fig. 7 dar. Im Gegensatz zur Teilkartendarstellung 34 der Fig. 8 sind die Darstellungselemente der Teilkartendarstellung 40 der Fig. 9 ausgedehnt bzw. erweitert. Diese Erweiterung bezieht sich insbesondere auf den Umformungsparameter der Darstellungselemente. In Fig. 9 wird ein Tiefenwert als Umformungsparameter verwendet, der zur besseren Veranschaulichung in der Abstufung der Grauwerte der Darstellungselemente wiedergegeben ist. Im vergrößerten Ausschnitt 41 der Teilkartendarstellung 40 ist zu erkennen, dass die Darstellungselemente bzw. die von den Darstellungselementen ausgehend definierten Tiefenwerte keine klare Grenze aufweisen sondern vielmehr einen Verlauf zwischen einem minimalen und einem maximalen Grauwert bzw. Tiefenwert beschreiben. Ein derartiger Verlauf der Tiefenwerte kann durch Anwenden eines Mittlungsfilters auf die für die Darstellungselemente der Teilkartendarstellung 40 berechneten Tiefenwerte erzeugt werden. Die Auswirkung derartig erweiterter Darstellungselemente bzw. Umformungsparameter der Teilkartendarstellung 40 auf die selektiv umgeformte Gesamtkartendarstellung ist in Fig. 10 exemplarisch dargestellt.

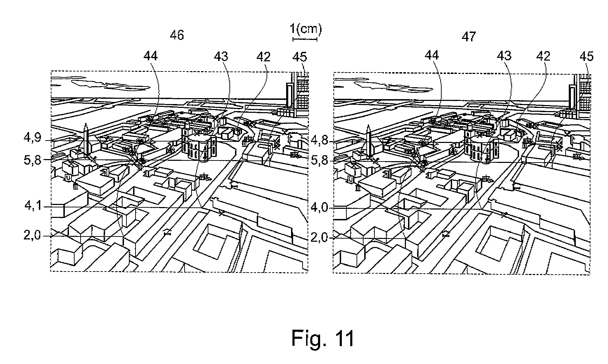

Fig. 10 zeigt beispielhaft fünf Methoden zur selektiven Umformung einer Gesamtkartendarstellung 32 (Fig. 7). In Analogie zu Fig. 8 entsprechen die Umformungsmethoden der fünf Darstellungen von links nach rechts und von oben nach unten einer Abdunklung 35, einer Negativbildbildung 36, einem Unschärfefilter 37, einem Pinselstrichzeichnungseffekt 38 und einem Bleistiftzeichnungseffekt 39. Im Gegensatz zur Fig. 8 ist die selektive Umformung der Gesamtkartendarstellung 32 der Fig. 11 anhand von erweiterten Darstellungselementen bzw. Umformungsparametern der Darstellungselemente der Teilkartendarstellung 40 aus Figur 9 erfolgt. Es ist ersichtlich, dass der Hervorhebungseffekt der zur verfolgenden Bewegungsroute in den exemplarisch umgeformten Kartendarstellungen der Fig. 9 noch deutlicher ersichtlich ist als in den Darstellungen der Fig. 8.

Fig. 11 zeigt ausgehend von der Gesamtkartendarstellung 32 und der Teilkartendarstellung 33 der Fig. 7 zwei jeweils separat umgeformte Gesamtkartendarstellungen 46, 47. Die Gesamtkartendarstellungen 46, 47 der Fig. 11 sind mit einer für jede Gesamtkartendarstellung separaten Umformungsvorschrift umgeformt worden, wobei die jeweilige Umformungsvorschrift anhand der Umformungsparameter bzw. Tiefenwerte der Teilkartendarstellung 33 eine horizontale Versschiebung der Darstellungselemente der Teilkartendarstellung zur Folge hatte. Durch diese selektiven separaten Umformungen der Ausgangskartendarstellung eignen sich die Gesamtkartendarstellungen 46, 47 der Fig. 11 als teilweise stereoskopische Halbbilder zur Anzeige mittels einer autostereoskopischen Anzeigeeinrichtung, wobei ein wahrnehmbarer Tiefeneindruck für die Darstellungselemente der Teilkartendarstellungen 33 der Fig. 7 für den Benutzer erkennbar wird.

Anhand der relativen horizontalen Positionen einzelner Darstellungselemente kann die jeweils selektive und separate Umformung der Gesamtdatendarstellungen, welche in Kombination mit einer geeigneten Anzeigeeinrichtung und einer geeigneten Anzeigetechnik zu einem stereoskopischen Bildeindruck führt, nachvollzogen werden. Für die Darstellungselementsreferenzpunkte 42 und 43, welche Punkte darstellen, die Teil der Teilkartendarstellung 33 der Fig. 7 sind, zeigt ein Vergleich ihrer relativen horizontalen Position vom jeweils linken Rand der Kartendarstellung eine Verschiebung um 0,1 Zentimeter bzw. um 0,1 Einheit an, was bei einer entsprechenden Anzeige auf einer autostereoskopischen Anzeigeeinrichtung zu einem wahrnehmbaren Tiefeneffekt der Darstellungselemente der Teilkartendarstellung 33 führt. Für die Darstellungselementsreferenzpunkte 44 und 45, die hingegen Darstellungselementen zuzuordnen sind, die nicht Teil der Teilkartendarstellung 33 sind, ist keine relative Verschiebung der jeweiligen horizontalen Position bezüglich des linken Rands der Kartendarstellung gegeben. Demnach werden die Darstellungselemente, die abseits der zu verfolgenden Bewegungsroute bzw. der Darstellungselemente der Teilkartendarstellung liegen, auch bei einer geeigneten Anzeige der Gesamtkartendarstellung 46, 47 der Fig. 11 auf einer stereoskopischen Anzeigeeinrichtung nicht mit einem Tiefeneindruck vom Benutzer wahrgenommen. Dementsprechend sind die separat umgeformten Gesamtkartendarstellungen 46, 47 der Fig. 11 ebenfalls in der Lage eine optische Hervorhebung wichtiger Teile der Kartendarstellung zu erzeugen.

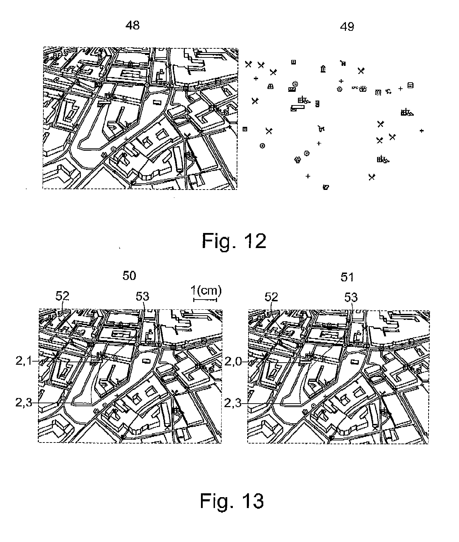

Fig. 12 zeigt eine Gesamtkartendarstellung 48 sowie eine Teilkartendarstellung 49, wobei im Unterschied zu den bisher dargestellten exemplarisehen Darstellungen die Teilkartendarstellung 49 als für den Benutzer wichtige und hervorhebenswerte Darstellungselemente die Darstellungselemente einer Darstellungselementsklasse umfasst. Im Beispiel der Fig. 12 handelt es sich bei der Darstellungselementklasse um Icons bzw. Piktogramme, die auf Sonderziele in der Gesamtkartendarstellung 48 hinweisen. Für die Darstellungselemente aus der Darstellungselementklasse der Sonderzielpiktogramme kann vorgesehen sein, dass den Darstellungselementen ein einheitlicher, von der Darstellungselementklasse abhängiger Umformungsparameter zugewiesen wird. Dieser Umformungsparameter kann wiederum als Parameter der selektiven Umformung in eine Umformungsvorschrift eingehen, anhand derer die Umformung der ursprünglichen Gesamtkartendarstellung 48 erfolgt.

In Fig. 13 sind zwei mittels separater Umformungsvorschrift aus der Gesamtkartendarstellung 48 und der Teilkartendarstellung 49 der Fig. 12 selektiv umgeformte Gesamtkartendarstellungen 50, 51 abgebildet. Die jeweiligen Umformungsvorschriften hatten dabei die horizontale Verschiebung von mit Umformungsparametern versehenen Darstellungselementen in Abhängigkeit der Darstellungsparameter zur Folge. Da es sich bei den mit Umformungsparametern versehenen Darstellungselementen um die Sonderziel-Icons der Teilkartendarstellung 49 der Fig. 12 handelte, ergibt sich bei geeigneter Anzeige der Gesamtkartendarstellungen 50, 51 der Fig. 13 eine mit Tiefeneindruck versehene Gesamtkartendarstellung auf einer stereoskopischen Anzeigeeinrichtung, bei der sich die Sonderziel-Icons in einer hervorgehobenen Ebene oberhalb der restlichen Darstellungselemente der Gesamtkartendarstellung befinden. Anhand der Darstellungselementreferenzpunkte 52 ist zu erkennen, dass eine relative horizontale Verschiebung des Darstellungselements eines Sonderziel-Icons erfolgt ist, wohingegen für Darstellungselemente, die nicht einem Sonderziel-Icon zuzuordnen sind, wie beispielweise der Darstellungselementreferenzpunkt 53, keine relative horizontale Verschiebung bezüglich der beiden Gesamtkartendarstellungen erfolgt ist.

## Patentansprüche

1. Verfahren zum Betrieb eines Navigationssystems mit einer Kartendatenspeichereinrichtung (02, 07), in der digitale Kartendaten (01, 06) zur Beschreibung eines geographischen Gebietes gespeichert sind, einer Darstellungserzeugungseinrichtung (3), die zumindest zur Erzeugung von Kartendarstellungen aus den Kartendaten der Kartendatenspeichereinrichtung (02, 07) eingerichtet ist, mit zumindest einer Anzeigeeinrichtung (05,13), die zur Darstellung optischer Inhalte eingerichtet ist, mit zumindest einer Positionsbestimmungseinrichtung, mit zumindest einer Routenberechnungseinrichtung zur Berechnung einer Bewegungsroute (19,34) von einem Startpunkt zu einem Zielpunkt,
umfassend die folgenden Verfahrenschritte:
a) Erstellen einer Gesamtkartendarstellung (14, 32, 46, 48) und Erstellen zumindest einer Teilkartendarstellung (15, 33, 47, 49) aus zumindest einem Teil der Kartendaten (1, 6) mittels der Darstellungserzeugungseinrichtung (3);
b) Identifizieren identischer Darstellungselemente (20, 21, 22) der zumindest einen Teilkartendarstellung (15, 33, 47, 49) und der Gesamtkartendarstellung (14, 32, 46, 48);
c) Ausführen von zumindest einem Darstellungsumformungsschritts (11), wobei für identische Darstellungselemente (20, 21, 22) der zumindest einen Teilkartendarstellung und der Gesamtkartendarstellung und/oder für zumindest einen Teil nicht in zumindest der einen Teilkartendarstellung enthaltenen Darstellungselemente (16, 17, 18) der Gesamtkartendarstellung zumindest eine selektive Darstellungsumformung (12) der Gesamtkartendarstellung erfolgt.

2. Verfahren nach Anspruch 1,
**dadurch gekennzeichnet,**
**dass** neben einer ersten Darstellungsumformung (27) zumindest eine zweite Darstellungsumformung (28) durchgeführt wird, wobei jede Darstellungsumformung (27, 28) zu einer jeweils separat umgeformten Gesamtkartendarstellung (29, 30, 46, 47,48, 49, 50, 51) führt.

3. Verfahren nach Anspruch 2,
**dadurch gekennzeichnet,**
**dass** sich zwei separat umgeformte, mittels Darstellungsumformung erzeugte, Gesamtkartendarstellungen (29, 30, 46, 47,48, 49, 50, 51) mittels der Anzeigeeinrichtung derart anzeigen lassen, dass eine Gesamtkartendarstellung mit Tiefeneindruck, insbesondere eine für den Menschen tatsächlich dreidimensional wahrnehmbare Gesamtkartendarstellung, ermöglicht wird.

4. Verfahren nach Anspruch 2 oder 3,
**dadurch gekennzeichnet,**
**dass** zwei separat umgeformte, mittels Darstellungsumformung erzeugte, Gesamtkartendarstellungen (29, 30, 46, 47,48, 49, 50, 51) als stereoskopische Halbbilder mittels einer stereoskopischen, insbesondere einer autostereoskopischen, Anzeigeeinrichtung angezeigt werden.

5. Verfahren nach einem der Ansprüche 1 bis 4,
**dadurch gekennzeichnet,**
**dass** zur Darstellungsumformung (12) Punktoperationen und/oder lokale Operationen und/oder globale Operationen verwendet werden.

6. Verfahren nach einem der Ansprüche 1 bis 5,
**dadurch gekennzeichnet,**
**dass** die Teilkartendarstellung (15, 33, 47) zumindest ein Darstellungselement (20, 21, 22) umfasst, das einen Teil der Bewegungsroute (19,34) von einem Startpunkt zu einem Zielpunkt beschreibt.

7. Verfahren nach einem der Ansprüche 1 bis 6,
**dadurch gekennzeichnet,**
**dass** die Teilkartendarstellung (49) zumindest ein Darstellungselement umfasst, das ein Point-of-Interest Icon (52) darstellt.

8. Verfahren nach einem der Ansprüche 1 bis 7,
**dadurch gekennzeichnet,**
**dass** das Erstellen einer Teilkartendarstellung (15, 33, 47, 49) einen Vorgang umfasst, mit dem den dargestellten Darstellungselementen zumindest (21, 22) teilweise ein Umformungsparameter (31) zugewiesen werden kann.

9. Verfahren nach Anspruch 8,
**dadurch gekennzeichnet,**
**dass** das Erstellen einer Teilkartendarstellung einen Vorgang umfasst, mit dem, ausgehend von mit Umformungsparameter (31) versehenen Darstellungselementen (21, 22), Umformungsparameter (31) in der Teilkartendarstellung (15, 33, 47, 49) definiert werden können, wobei die Umformungsparameter (31) auch Bereiche der Teilkartendartstellung (15, 33, 47, 49) betreffen können, die keine Darstellungselemente enthalten.

10. Verfahren nach Anspruch 8 oder 9,
**dadurch gekennzeichnet,**
**dass** die zumindest eine Darstellungsumformung in Abhängigkeit einer Umformungsvorschrift erfolgen kann, wobei die Umformungsparameter (31) Eingang in die Umformungsvorschrift finden.

11. Verfahren nach einem der Ansprüche 8 bis 10,
**dadurch gekennzeichnet,**
**dass** es sich bei dem Umformungsparameter (31) um einen Tiefenwert handelt.

12. Verfahren nach Anspruch 11,
**dadurch gekennzeichnet,**
**dass** einem Darstellungselement (21, 22) ein Tiefenwert in Abhängigkeit der räumlichen Position des Darstellungselements (21, 22) zugewiesen werden kann.

13. Verfahren nach Anspruch 11 oder 12,
**dadurch gekennzeichnet,**
**dass** einem Darstellungselement (21, 22) ein Tiefenwert in Abhängigkeit einer Darstellungselementklasse zugewiesen werden kann, wobei eine Darstellungselementklasse Darstellungselemente (52) zusammenfasst, die identische Elementeigenschaften aufweisen.
